# EUROPEAN PATENT SPECIFICATION

(11) **EP 3 708 842 B1**
(45) Date of publication and mention of the grant of the patent: **28.07.2021**
(21) Application number: 19778420.0
(22) Date of filing: 28.03.2019
(51) Int. Cl.: F04D 19/00, F04D 29/38, F24F 1/0033, F04D 19/02

(54) **FAN AND AIR CONDITIONER INDOOR UNIT HAVING SAME**
LÜFTER UND KLIMAANLAGENINNENRAUMEINHEIT DAMIT
VENTILATEUR ET UNITÉ INTÉRIEURE DE CLIMATISEUR DOTÉE DUDIT VENTILATEUR

(30) Priority: 30.01.2019 CN 201910093427; 30.01.2019 CN 201920176844 U
(43) Date of publication of application: 16.09.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: CAI, Xujie, Guangdong 528311 (CN); ZHOU, Heijie, Guangdong 528311 (CN); ZHANG, Tao, Guangdong 528311 (CN); LI, Shuqi, Guangdong 528311 (CN); LI, Jinbo, Guangdong 528311 (CN); ZHANG, Hui, Guangdong 528311 (CN)
(74) Representative: Lam, Alvin
(86) International application number: PCT/CN2019/080045
(87) International publication number: WO 2020/155350

(56) References cited:
- WO-A1-2007/148645
- WO-A1-2017/054503
- CN-A- 106 968 973
- CN-A- 108 253 543
- CN-A- 108 266 809
- CN-A- 109 028 348
- CN-U- 205 714 837
- CN-U- 208 025 666
- CN-U- 208 025 670
- US-A1- 2011 174 011
- US-A1- 2018 156 222

## Description

### FIELD

The present disclosure relates to the refrigeration field, in particular to a fan and an air conditioner indoor unit having same.

### BACKGROUND

Air supply fan of related air conditioner is axial fan, cross-flow fan, or centrifugal blower. There are usually one to three fans, working in parallel.

Axial fan and cross-flow fan offer higher efficiency in air supply, but the air supply distance is short; while centrifugal blower can supply air for a longer distance with low efficiency. Multiple fans in parallel help improve the air circulation flow rate of air supply, but cannot enhance the fan efficiency.

US2011/174011A1 relates to a ventilating device including a counter-rotating fan having improved wind ventilation efficiency as well as minimized noise generated during the fan operation.

### SUMMARY

The present invention aims to solve one of existing technical problems in the related art.

Therefore, the present invention presents a fan to improve an air supply distance and an air supply efficiency.

The present invention also provides an air conditioner indoor unit having the above fan.

In accordance with the present invention, there is provided a fan as set out in claim 1 and an aiconditioning system as set out in claim 4.

Other aspects of the invention can be found in the dependent claims.

The fan according to the present invention can increase a wind pressure, and also improve the air supply distance and the air supply efficiency.

The air conditioner indoor unit in the embodiments can increase the wind pressure, and also improve the air supply distance and the air supply efficiency through the above fan. When the first wind wheel and the second wind wheel operate with different velocities, the air supply can be gentle or breezeless.

Additional information and advantages of the present disclosure will be illustrated below, which will become obvious in the below description or be understood from the practice of the present disclosure.

### BRIEF DESCRIPTION OF THE DRAWINGS

The above and or additional information and advantages of the present disclosure will become apparent from the description of embodiments in combination with the below diagrams, in which
Fig. 1 shows the front view of a fan, where first rotation axis and second rotation axis are collinear, such a fan is not according to the present invention;
Fig. 2 shows the front view of a fan according to the present invention, where first rotation axis and second rotation axis are spaced;
Fig. 3 shows the front view of a fan, where an included angle exists between first rotation axis and second rotation axis, such a fan is not according to the present invention;
Fig. 4 shows the vertical view of the fan;
Fig. 5 shows the position relation between the fan and reference plane;
Fig. 6 shows the fan, reference plane, first projection, and second projection;
Fig. 7 shows the first projection;
Fig. 8 shows the position relation between first projection, second projection, first vertical line, second vertical line of the fan and the Y-axis;
Fig. 9 shows an air conditioner hung unit;
Fig. 10 shows the stereoscopic view of a vertical indoor unit;
Fig. 11 shows the exploded view of the vertical indoor unit.

### Reference Numerals:

air conditioner indoor unit 1000,
fan 100, housing 200, air inlet 4, air outlet 5, rear plate component 6, face plate component 7, indoor heat exchanger 300, air duct mounting plate 400, air outlet frame component 500,
first wind wheel 1, first hub 10, first blade 11, first projection 12, first convex curve 120, first concave curve 121, first tangent 14, first connecting line 15, first vertical line 16, first rotation axis 17,
second wind wheel 2, second hub 20, second blade 21, second projection 22, second convex curve 220, second concave curve 221, second tangent 24, second connecting line 25, second vertical line 26, second rotation axis 27, and reference plane 3.

### DETAILED DESCRIPTIONS

The embodiments of the present disclosure are described in detail below, and examples of the embodiments are shown in the attached drawings, throughout which the identical or similar labels are used to denote the identical or similar elements or elements having identical or similar functions. The embodiments described below by reference to the attached drawings are illustrative and are used only to interpret the present disclosure but should not be construed as restrictions on the present invention. The present invention is solely defined by the appended claims.

In the description of the present disclosure, it should be understood that the orientation or position relations indicated with the terms "central", "longitudinal ", "transverse", "length", "width", "thickness", "up", "down", "front", "back", "left", "right", "vertical", "horizontal", "top", "bottom", "in", "out", "clockwise", "anti-clockwise", "axial", "radial", and "circumferential" are based on the orientation or position relationships shown in the attached drawings, are used only for the convenience of describing the present disclosure and simplifying the description, rather than indicating or implying that the device or element referred to must have a particular orientation, be constructed and operated in a particular orientation, so they shall not be construed as a restriction on the present disclosure. In addition, a feature defined as "first" or "second" may, explicitly or implicitly, include one or more such features. Unless otherwise stated, "multiple" means two or more in the description of the present disclosure.

In the description of the present disclosure, it should be noted that unless otherwise expressly specified and defined, the terms "installation", "linking" and "connection" shall be understood generally, for example, it may be fixed connection, detachable connection, or integral connection; or mechanical or electrical connections; or direct linking, indirect linking through an intermediate medium, or internal connection of two components. The specific meaning of the above terms in the present disclosure may be understood on a case by case basis by ordinary technical personnel in the field.

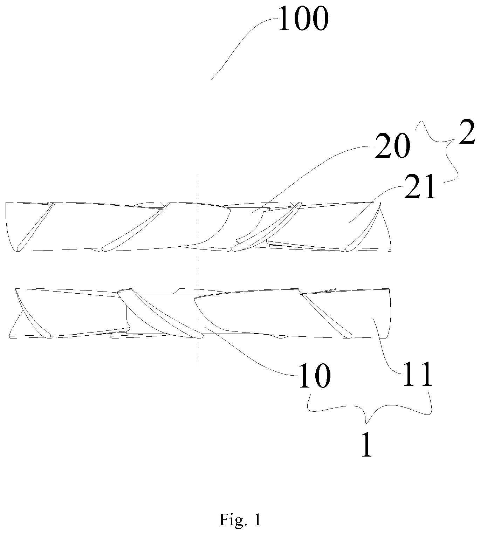

As shown in Fig. 1 to Fig. 8, fan 100 in the embodiments of the present disclosure can be air supply fan of indoor unit, and the indoor unit can be cassette, window, hung, or packaged.

As shown in Fig. 1 to Fig. 8, fan 100 in the embodiments of the present disclosure includes first wind wheel 1 and second wind wheel 2. First wind wheel 1 includes first hub 10 and multiple first blades 11 spaced on first hub 10, and possesses first rotation axis 17. Second wind wheel 2 includes second hub 20 and multiple second blades 21 spaced on second hub 20. In terms of the flowing direction of air, first wind wheel 1 is located at the upstream of the second wind wheel 2, and second wind wheel 2 possesses second rotation axis 27. In other words, during the running of fan 100, air passes through first wind wheel 1 and then second wind wheel 2. First rotation axis 17 is the central axis of rotation of first wind wheel 1, and second rotation axis 27 is the central axis of rotation of second wind wheel 2. First wind wheel 1 is a diagonal wind wheel or an axial flow wind wheel, and second wind wheel 2 is a diagonal wind wheel or an axial flow wind wheel.

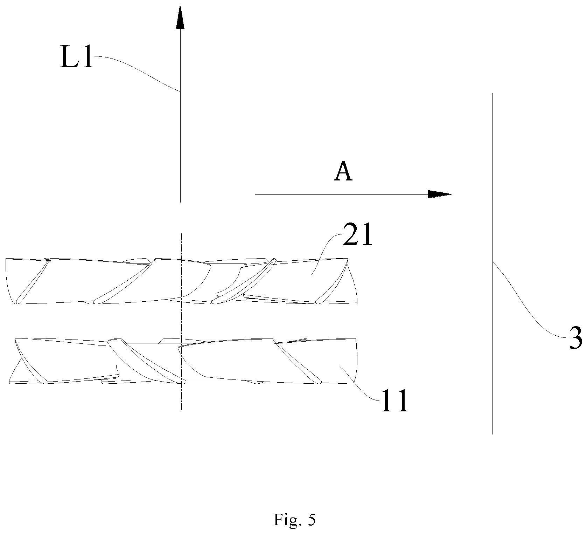

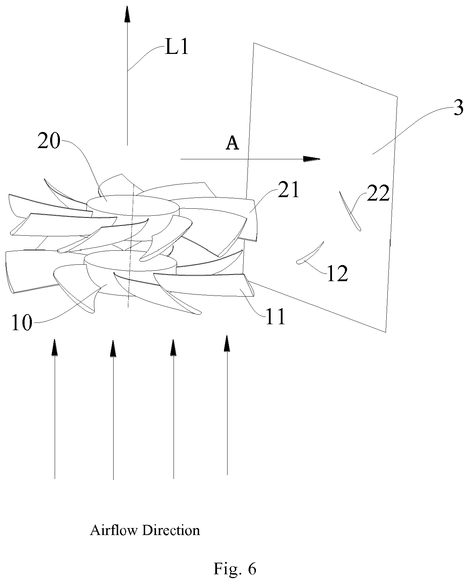

We set one plane spaced with the fan 100 as a reference plane 3, which is parallel to first rotation axis 17 or second rotation axis 27, taking the orthographic projection of first rotation axis 17 or second rotation axis 27 on the reference plane 3 as Y-axis, the straight line which is on the reference plane 3 and perpendicular to the Y-axis as X-axis. Specifically, reference plane 3 is spaced with fan 100, and reference plane 3 is at least parallel to either first rotation axis 17 or second rotation axis 27. In Fig. 5 and Fig. 6, the direction of arrow A is the direction of orthographic projection of fan 100, Y-axis is orthographic projection of first rotation axis 17 or second rotation axis 27 on the reference plane 3, and X-axis is perpendicular to Y-axis. In some examples of the present disclosure, orthographic projection of first rotation axis 17 or second rotation axis 27, which is parallel to reference plane 3, on the reference plane 3 is regarded as Y-axis. For instance, reference plane 3 is parallel to first rotation axis 17, and orthographic projection of first rotation axis 17 on the reference plane 3 is Y-axis. In Fig. 1, first rotation axis 17 and second rotation axis 27 are collinear, and the straight line indicated by arrow L1 is first rotation axis 17 or second rotation axis 27, such a fan is not according to the present invention.

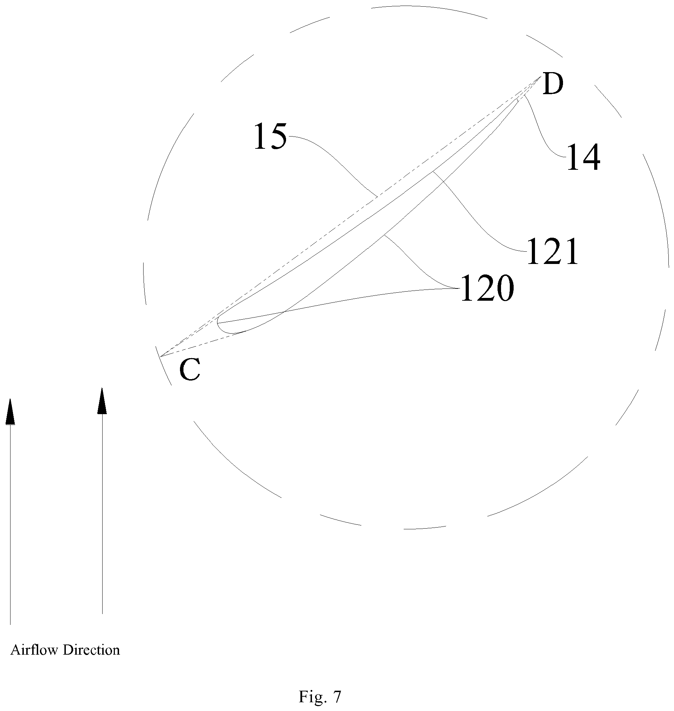

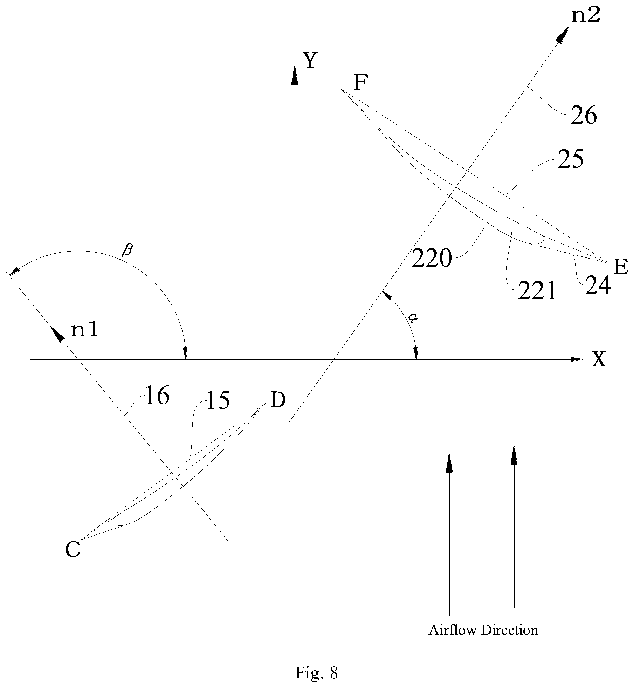

The orthographic projection on the reference plane 3 when each first blade 11 rotates to the position at the shortest distance from the reference plane 3 is first projection 12, and first projection 12 includes first convex curve 120 and first concave curve 121 which are put end to end. We set two first intersections on the reference plane 3. In terms of the flowing direction of air, two first intersections are located at upstream and downstream respectively of first projection 12. Each first intersection is the intersection of two first tangents 14, two first tangents 14 on the same side are tangent to first convex curve 120 and first concave curve 121 respectively. The connecting line of two first intersections is first connecting line 15. The straight line perpendicular to first connecting line 15 is first vertical line 16. Specifically, each first blade 11 has first projection 12. In terms of the flowing direction of air, first projection 12 has leading edge (air inlet) and trailing edge (air outlet). As is shown in Fig. 7 and Fig. 8, first projection 12 sets first intersection C (at upstream) near the leading edge and first intersection D (at downstream) near the trailing edge. Two first tangents 14 on the same side are tangent to first convex curve 120 and first concave curve 121 respectively. The connecting line of first intersection C and first intersection D is first connecting line 15. First vertical line 16 is perpendicular to first connecting line 15. It should be noted that one first tangent 14 creating first intersection C can be tangent of any point on the side near the leading edge of first convex curve 120, and the other first tangent 14 creating first intersection C can be tangent of any point on the side near the leading edge of first concave curve 121.

One first tangent 14 creating first intersection D can be tangent of any point on the side near the trailing edge of first convex curve 120, and the other first tangent 14 creating first intersection D can be tangent of any point on the side near the trailing edge of first concave curve 121.

It should be noted that one point of first blade 11 can be regarded as first reference point. When first blade 11 rotates to the position where first reference point is at the shortest distance from reference plane 3, it can be determined that first blade 11 rotates to the position at the shortest distance from reference plane 3. During the determination of distance between first reference point and reference plane 3, we compare the radial distances between the same first reference point at different positions and reference plane 3. For instance, suppose the radial distance between first reference point and first rotation axis 17 is longer than the radial distance between first blade 11 at other positions and first rotation axis 17. If first reference point rotates to the position at the shortest distance from reference plane 3, we can determine that first blade 11 rotates to the position at the shortest distance from reference plane 3.

The orthographic projection on the reference plane 3 when each second blade 21 rotates to the position at the shortest distance from the reference plane 3 is second projection 22, and the second projection 22 includes second convex curve 220 and second concave curve 221 which are put end to end. We set two second intersections on the reference plane 3. In terms of the flowing direction of air, two second intersections are located at upstream and downstream respectively of the second projection 22. Each second intersection is the intersection of two second tangents 24, two second tangents 24 on the same side are tangent to the second convex curve 220 and second concave curve 221 respectively. The connecting line of two second intersections is second connecting line 25. The straight line perpendicular to the second connecting line 25 is second vertical line 26. Specifically, each second blade 21 has second projection 22. In terms of the flowing direction of air, second projection 22 has leading edge (air inlet) and trailing edge (air outlet). As Fig. 8 shows, second projection 22 sets second intersection E (at upstream) near the leading edge and second intersection F (at downstream) near the trailing edge. Two second tangents 24 on the same side are tangent to second convex curve 220 and second concave curve 221 respectively. The connecting line of second intersection E and second intersection F is second connecting line 25. Second vertical line 26 is perpendicular to the second connecting line 25. It should be noted that one second tangent 24 creating second intersection E can be tangent of any point on the side near the leading edge of second convex curve 220, and the other second tangent 24 creating second intersection E can be tangent of any point on the side near the leading edge of second concave curve 221.

One second tangent 24 creating second intersection F can be tangent of any point on the side near the trailing edge of second convex curve 220, and the other second tangent 24 creating second intersection F can be tangent of any point on the side near the trailing edge of second concave curve 221.

It should be noted that one point of second blade 21 can be regarded as second reference point. When second blade 21 rotates to the position where second reference point is at the shortest distance from reference plane 3, it can be determined that second blade 21 rotates to the position at the shortest distance from reference plane 3. During the determination of distance between second reference point and reference plane 3, we compare the radial distances between the same second reference point at different positions and reference plane 3. For instance, suppose the radial distance between second reference point and second rotation axis 27 is longer than the radial distance between second blade 21 at other positions and second rotation axis 27. If the second reference point rotates to the position at the shortest distance from reference plane 3, we can determine that second blade 21 rotates to the position at the shortest distance from reference plane 3.

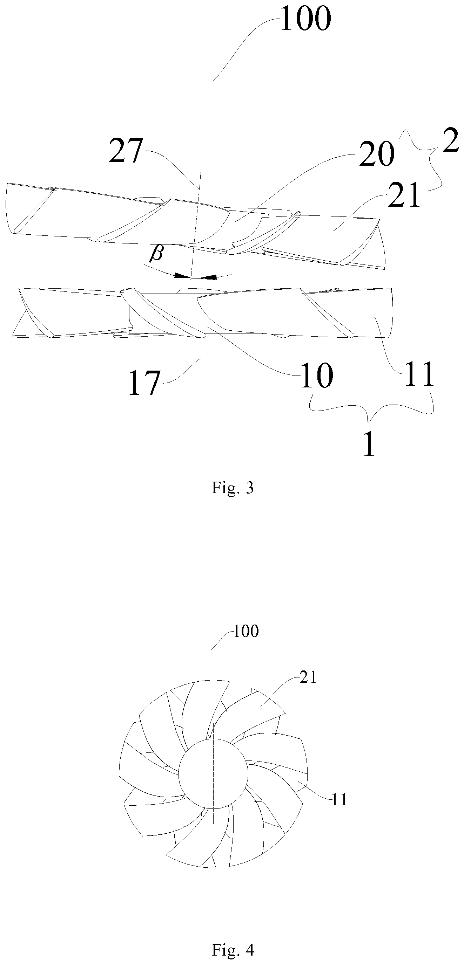

Either first vertical line 16 or the second vertical line 26 forms a positive included angle with the X-axis, which is an acute angle. The other forms a positive included angle with the X-axis, which is an obtuse angle. It should be noted that the positive included angle refers to the included angle between vertical line and direction of arrow of X-axis. Specifically, as Fig. 8 shows, the positive included angle between first vertical line 16 and X-axis is β (which is not the same angle β as shown in fig.3), and the positive included angle between second vertical line 26 and X-axis is α. In β and α, one is an acute angle, and the other is an obtuse angle. In specific example in Fig. 8, positive included angle β is an obtuse angle, and positive included angle α is an acute angle. In other words, first vertical line 16 and second vertical line 26 are located in different quadrants. For instance, first vertical line 16 is located in No. 2, No. 3, and No. 4 quadrants, and second vertical line 26 is located in No. 1, No. 3, and No. 4 quadrants. In other words, in terms of the flowing direction of air, first vertical line 16 and second vertical line 26 are inclined relative to Y-axis in opposite direction. Briefly, first blade 11 rotates in the opposite direction from second blade 21. It should be noted that the rotation direction of blade refers to the inclination direction of blade relative to Y-axis in the description of the present disclosure. It's understandable that multiple first blades 11 share the same rotation direction, and multiple second blades 21 share the same rotation direction.

Specifically, during the rotation of fan 100, either first vertical line 16 of first blade 11 or second vertical line 26 of second blade 21 forms a positive acute angle with X-axis, and the other forms a positive obtuse angle with X-axis. Therefore the circumferential velocity of airflow of the blade exit of first blade 11 and second blade 21 is in the opposite direction and mutually offset. We can obtain approximate pure "axial" flat airflow, that is, most and even all airflows blow out axially. It further improves the air supply distance.

As the circumferential velocities of airflow of the blade exit of first blade 11 and second blade 21 are in the opposite directions, the relative velocity of blade inlet airflow of second wind wheel 2 and second blade 21 is enhanced. It further improves the air supply efficiency.

In addition, fan 100 adopts the front and rear arrangement of first wind wheel 1 and second wind wheel 2 along the airflow. It can improve wind pressure and air supply distance with the airflow unchanged.

The fan 100 in the embodiments of the present disclosure can improve wind pressure, air supply distance, and air supply efficiency.

In some embodiments of the present disclosure, first wind wheel 1 is driven by a motor, and second wind wheel 2 is driven by the other motor. Therefore the velocity and direction of rotation of both first wind wheel 1 and second wind wheel 2 can be independently controlled.

In other embodiments of the present disclosure, either first wind wheel 1 or second wind wheel 2 has motor, and the other has no motor. While motor drives one wind wheel to rotate, the airflow drives the other wind wheel to rotate. It is understandable that it is not the only drive method for first wind wheel 1 or second wind wheel 2. The running status of first wind wheel 1 and second wind wheel 2 can be set as needed. For instance, we can control the rotation of first wind wheel 1 and second wind wheel 2 at the same or different rotational velocities. We can also enable them to rotate in the same or opposite direction.

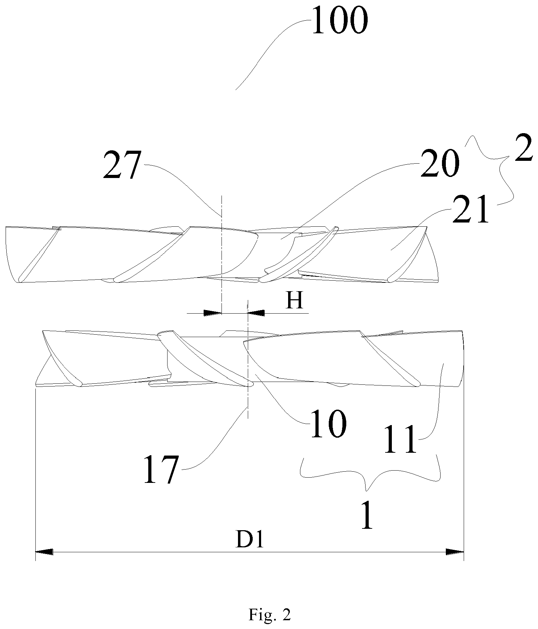

According to the present invention, first rotation axis 17 and second rotation axis 27 are in parallel. So the winds supplied by first blade 11 and second blade 21 are in parallel, which increases air supply distance. In addition, as Fig. 2 shows, there is distance H between first rotation axis 17 and second rotation axis 27. Therefore, during the installation of fan 100, it is not necessary to aim at first rotation axis 17 or second rotation axis 27, facilitating the installation of first wind wheel 1 and second wind wheel 2, and adjustment of angle of airflow after passing through second wind wheel 2. Suppose the diameter of first wind wheel 1 is D1, then the distance H and diameter D1 satisfy the relation: H≤0.2D1. It avoids the influence of excessive space between first rotation axis 17 and second rotation axis 27 on the offset of circumferential velocities of airflow of the blade exit of two wind wheels, so as to assure the air supply distance and air supply efficiency. To ensure the air supply distance, first rotation axis 17 and second rotation axis 27 can be collinear (as shown in Fig. 1), such a fan is however not according to the present invention.

Also outside the scope of the invention, and as Fig. 3 shows, there can be included angle β (which is not the same angle β as shown in fig.8), between first rotation axis 17 and second rotation axis 27. So the angle of airflow after passing through second wind wheel 2 can be adjusted. Specifically, the included angle β between first rotation axis 17 and second rotation axis 27 ranges from 0 to 20°, e.g. 5°, 10°, and 15°. It avoids the influence of excessive included angle between two axes of rotation on the offset of circumferential velocity of airflow of the blade exit of two wind wheels, so as to assure the air supply distance and air supply efficiency.

In some embodiments of the present disclosure, the diameters of first wind wheel 1 and second wind wheel 2 are different. Therefore according to actual need, first wind wheel 1 and / or second wind wheel 2 can be activated, so as to adjust the air volume of fan 100, and increase the related adjustment scope. In other embodiments of the present disclosure, the diameters of first wind wheel 1 and second wind wheel 2 are equal. It decreases part type and cuts cost.

Suppose the diameter of first wind wheel 1 is D1, and the diameter of second wind wheel 2 is D2. Upon numerous experiments, the applicant found that if D2≤0.6D1, the power of motor driving the rotation of second wind wheel 2 is smaller than that driving the rotation of first wind wheel 1. In terms of increasing static pressure by doing work on the air, the air pressure on the surface of second blade 21 is higher than that of first blade 11. If wind wheel has a small diameter (small area), wind wheel is more likely to vibrate due to change in air pressure, consequently increasing noise. Therefore, in some specific embodiments of the present disclosure, the diameters of first wind wheel 1 and second wind wheel 2 satisfy the relation: D2≥0.6D1. In this case, the vibration of second wind wheel 2 due to change in air pressure is avoided, the consequent noise does not occur, and users feel more comfortable.

The indoor unit 1000 in the embodiments of the present disclosure includes: housing 200, indoor heat exchanger 300, and fan 100. There are air inlet 4 and air outlet 5 on the housing 200. The indoor heat exchanger 300 is located in the housing 200. The fan 100, which is included in the embodiments of the present disclosure, is located in the housing 200, supplying air toward the air outlet 5. Specifically, indoor unit 1000 can be cassette, window, hung, or packaged.

As the blades of first wind wheel 1 and second wind wheel 2 are inclined in opposite directions, first wind wheel 1 and second wind wheel 2 act as the mutual guide blade in airflow direction. It reduces (while first wind wheel 1 and second wind wheel 2 having different rotational velocities) or eliminates (while first wind wheel 1 and second wind wheel 2 have the same rotational velocity) rotational velocity of tangential air flow (converting dynamic pressure into static pressure), and enhance the efficiency of contra-rotating fan in terms of doing work on the air. Moreover, the airflow passing through two wind wheels flow toward the air outlet 5, achieving the effect of long-distance air supply. It should be noted that the contra-rotating fan can supply air for a longer distance whether its first wind wheel 1 and second wind wheel 2 rotate reversely with the same or different velocities, compared with single cross-flow fan, axial fan, or diagonal fan.

Moreover, if first wind wheel 1 and second wind wheel 2 rotate with different velocities, the supply scope of cold air can be expanded. Because while one wind wheel rotates with higher rotational velocity while the other rotates with lower velocity, the wind wheel with higher rotational velocity plays a dominant role. If the angle of airflow outlet of blade based on single-stage axial or diagonal fan deviates from axis of rotation, the axial flow wind wheel or diagonal wind wheel itself can scatter wind. In this case, the angular scope of cold air from the air outlet 5 is bigger, which means wide-angle air supply. In addition, based on the effect of scattering wind of axial flow wind wheel or diagonal wind wheel, we can adjust the rotational velocities of first wind wheel 1 and second wind wheel 2 so that they can rotate with different velocities. Consequently air supply can be gentle or breezeless, avoiding the undesirable experience to user if the cold wind directly blows toward user after passing from the air outlet 5. Therefore, the indoor unit 1000 in the embodiments of the present disclosure can offer gentle breeze or breezeless experience without using air deflector with pores, and lose very limited air flow. It should be noted that to achieve wide angle and breezeless air supply, we can stop the motor running of one wind wheel, and allow the other wind wheel to supply air forwardly to the air outlet 5. Moreover, to achieve wide angle and breezeless air supply, we can allow one wind wheel to supply air reversely toward the inside of the housing 200, and the other wind wheel to supply air forwardly. The forward air blows out from the air outlet 5 under the action of wind wheel, while the reverse air blows into the inside of the housing 200.

With the above fan 100, the air conditioner indoor unit 1000 in the embodiments of the present disclosure can improve wind pressure, air supply distance, and air supply efficiency. While first wind wheel 1 and second wind wheel 2 are running with different velocities, air supply can be gentle or breezeless.

In some embodiments of the present disclosure, there are multiple air outlets 5. The fan 100 in the embodiments of the present disclosure is behind one air outlet 5, while axial fan, cross-flow fan, or centrifugal blower is behind another air outlet 5.

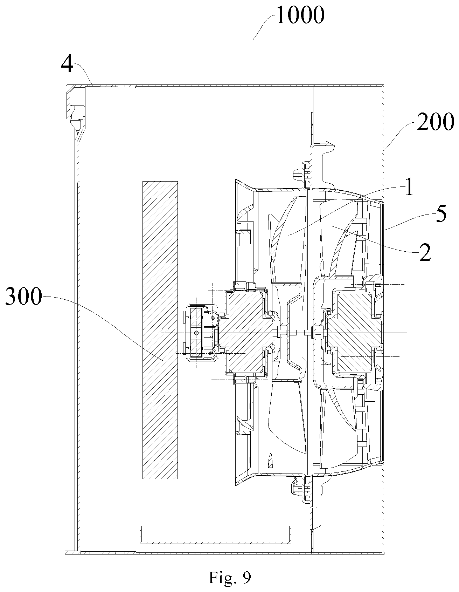

In some embodiments of the present disclosure, as Fig. 9 shows, indoor unit 1000 is a hung unit, and air outlet 5 is located on the face plate of housing 200. In Fig. 9, there is air inlet 4 on the upper wall of the housing 200.

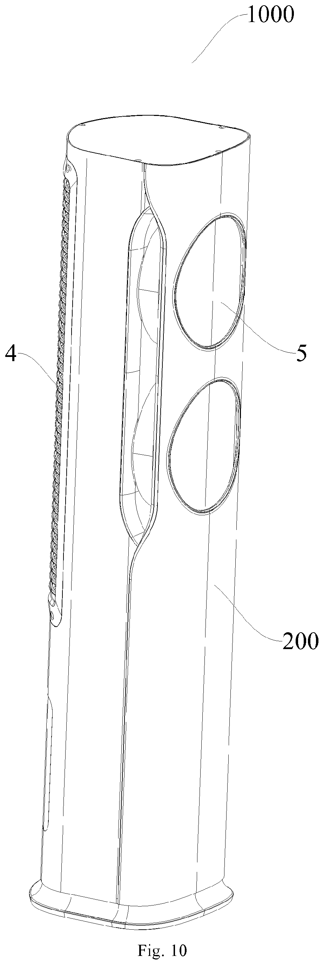

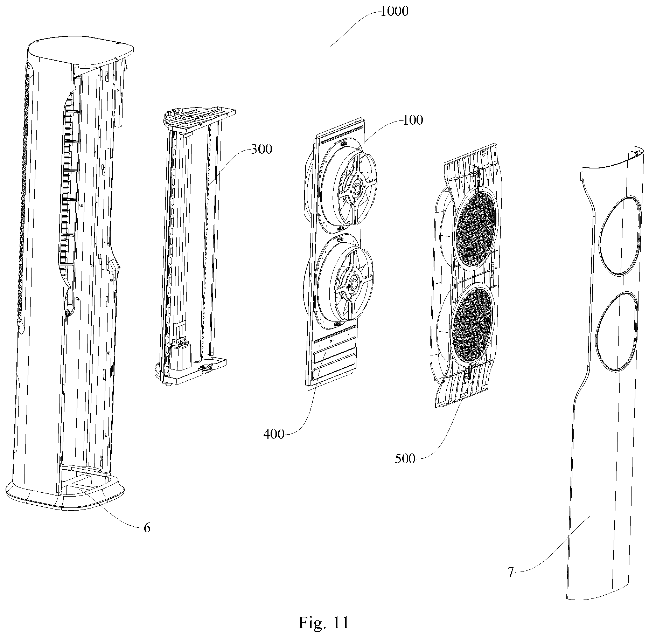

In some embodiments of the present disclosure, as Fig. 10 and Fig. 11 show, indoor unit 1000 is vertical indoor unit 1000, which also includes air duct mounting plate 400. The air duct mounting plate 400 is in front of the indoor heat exchanger 300, and fan 100 is fixed on the air duct mounting plate 400, so as to fix the fan 100. Specifically, housing 200 includes rear plate component 6 and face plate component 7. The front of the rear plate component 6 is open, and the face plate component 7 is located in front of the rear plate component 6. The air inlet 4 and air outlet 5 are located on the rear plate component 6 and face plate component 7 respectively.

In specific example in Fig. 11, vertical indoor unit 1000 also includes air outlet frame component 500. Located between air duct mounting plate 400 and housing 200, the air outlet frame component 500 can adjust the airflow direction. For instance, air outlet frame component 500 is equipped with louver which can adjust the airflow direction.

Other components of the indoor unit and related operation in the embodiments of the present disclosure, such as indoor heat exchanger and electrical - controlled appliance, are known to common technicians in the field, so we do not describe them here.

Although the embodiments of the present disclosure have been presented and described, the ordinary technical personnel in the field can understand that multiple changes, modifications, substitutions and variations of such embodiments can be made without deviating from the principles and purposes of the present disclosure. However, the scope of the present invention is solely defined by the appended claims.

## Claims

1. A fan (100), comprising:
a first wind wheel (1) comprising a first hub (10) and a plurality of first blades (11) arranged on the first hub and spaced apart from one another, and first wind wheel having a first rotation axis (17), wherein the first wind wheel is a diagonal wind wheel or an axial flow wind wheel;
a second wind wheel (2) comprising a second hub (20) and a plurality of second blades (21) arranged on the second hub and spaced apart from one another, the second wind wheel having a second rotation axis(27), and the first wind wheel being arranged at the upstream of the second wind wheel in a flowing direction of an airflow, wherein the second wind wheel is a diagonal wind wheel or an axial flow wind wheel,
wherein one plane spaced apart from the fan is set as a reference plane (3), the reference plane is parallel to the first rotation axis or the second rotation axis, an orthographic projection of the first rotation axis or the second rotation axis on the reference plane is set as Y-axis, and a straight line on the reference plane and perpendicular to the Y-axis is set as X-axis,
wherein when each first blade rotates to a position at a shortest distance from the reference plane, the orthographic projection of the first blade on the reference plane is a first projection (12), the first projection includes a first convex curve (120) and a first concave curve (121) connected end to end, two first intersections (C, D) are set on the reference plane and arranged at upstream and downstream of the first projection in the flowing direction of the airflow, respectively, each first intersection is an intersection of two first tangents (14), two first tangents on the same side are tangent to the first convex curve and the first concave curve, respectively, a connecting line of the two first intersections is a first connecting line (15), and a straight line perpendicular to the first connecting line is a first vertical line (16),
wherein when each second blade rotates to a position at a shortest distance from the reference plane, the orthographic projection of the second blade on the reference plane is a second projection, the second projection includes a second convex curve (220) and a second concave curve (221) connected end to end, two second intersections (E, F) are set on the reference plane and arranged at upstream and downstream of the second projection in the flowing direction of the airflow, respectively, each second intersection is an intersection of two second tangents, two second tangents on the same side are tangent to the second convex curve and the second concave curve, respectively, a connecting line of the two second intersections is a second connecting line (25), a straight line perpendicular to the second connecting line is a second vertical line (26), one of the first vertical line and the second vertical line has a positive included angle, which is an acute angle (α), with the X-axis, and the other one thereof has another positive included angle, which is an obtuse angle (β), with the X-axis such that the first vertical line and the second vertical line are inclined in opposite directions relative to the Y-axis, and
wherein the first rotation axis is parallel with the second rotation axis,
the fan being **characterised in that** the first rotation axis and the second rotation axis are separated by a distance H, and wherein the first wind wheel has a diameter D1, and the distance H and the diameter D1 satisfy a relation: H≤0.2D1.

2. The fan according to claim 1, wherein the diameter of the first wind wheel is different from a diameter of the second wind wheel.

3. The fan according to claim 2, wherein the diameter of the second wind wheel is denoted as D2, and D2≥0.6D1.

4. An air conditioner indoor unit (1000), comprising:
a housing (200) provided with an air inlet (4) and an air outlet (5);
an indoor heat exchanger (300) arranged in the housing;
a fan (100) according to any one of claims 1 to 3, the fan being arranged in the housing and configured to supply air toward the air outlet.

5. The air conditioner indoor unit according to claim 4, wherein the air conditioner indoor unit is a vertical air conditioner indoor unit, the vertical air conditioner indoor unit further comprises an air duct mounting plate, the air duct mounting plate is arranged in front of the indoor heat exchanger, and the fan is fixed to the air duct mounting plate.

6. The air conditioner indoor unit according to claim 4, wherein the air conditioner indoor unit is a hung unit, and the air outlet is formed in a front panel of the housing.

## Patentansprüche

1. Gebläse (100), umfassend:
ein erstes Lüfterrad (1), umfassend eine erste Nabe (10) und eine Vielzahl erster Flügel (11), die auf der ersten Nabe angeordnet und voneinander beabstandet sind, wobei das erste Lüfterrad eine erste Drehachse (17) aufweist, wobei es sich bei dem ersten Lüfterrad um ein Diagonallüfterrad oder ein Axialstromlüfterrad handelt;
ein zweites Lüfterrad (2), umfassend eine zweite Nabe (20) und eine Vielzahl zweiter Flügeln (21), die auf der zweiten Nabe angeordnet und voneinander beabstandet sind, wobei das zweite Lüfterrad eine zweite Drehachse (27) aufweist und das erste Lüfterrad in einer Strömungsrichtung eines Luftstroms stromaufwärts des zweiten Lüfterrads angeordnet ist, wobei es sich bei dem zweiten Lüfterrad um ein Diagonallüfterrad oder ein Axialstromlüfterrad handelt,
wobei eine von dem Gebläse beabstandete Ebene als eine Bezugsebene (3) festgelegt ist, die Bezugsebene zu der ersten Drehachse oder der zweiten Drehachse parallel ist, eine orthographische Projektion der ersten Drehachse oder der zweiten Drehachse auf die Bezugsebene als Y-Achse festgelegt ist und eine zu der Y-Achse senkrechte Gerade auf der Bezugsebene als X-Achse festgelegt ist,
wobei, wenn sich jeder erste Flügel in eine Position in einer kürzesten Entfernung von der Bezugsebene dreht, die orthographische Projektion des ersten Flügels auf die Bezugsebene eine erste Projektion (12) ist, die erste Projektion eine erste konvexe Kurve (120) und eine erste konkave Kurve (121), die Ende an Ende verbunden sind, umfasst, zwei erste Schnittpunkte (C, D) auf der Bezugsebene festgelegt sind und in der Strömungsrichtung des Luftstroms stromaufwärts bzw. stromabwärts der ersten Projektion angeordnet sind, jeder erste Schnittpunkt ein Schnittpunkt zwei erster Tangenten (14) ist, zwei erste Tangenten auf derselben Seite tangential zu der ersten konvexen Kurve bzw. der ersten konkaven Kurve sind, eine Verbindungslinie der zwei ersten Schnittpunkte eine erste Verbindungslinie (15) ist und eine zu der ersten Verbindungslinie senkrechte Gerade eine erste Vertikale (16) ist,
wobei, wenn sich jeder zweite Flügel in eine Position in einer kürzesten Entfernung von der Bezugsebene dreht, die orthographische Projektion des zweiten Flügels auf die Bezugsebene eine zweite Projektion ist, die zweite Projektion eine zweite konvexe Kurve (220) und eine zweite konkave Kurve (221), die Ende an Ende verbunden sind, umfasst, zwei zweite Schnittpunkte (E, F) auf der Bezugsebene festgelegt sind und in der Strömungsrichtung des Luftstroms stromaufwärts bzw. stromabwärts der zweiten Projektion angeordnet sind, jeder zweite Schnittpunkt ein Schnittpunkt zwei zweiter Tangenten ist, zwei zweite Tangenten auf derselben Seite tangential zu der zweiten konvexen Kurve bzw. der zweiten konkaven Kurve sind, eine Verbindungslinie der zwei zweiten Schnittpunkte eine zweite Verbindungslinie (25) ist, eine zu der zweiten Verbindungslinie senkrechte Gerade eine zweite Vertikale (26) ist, eine von der ersten Vertikalen und der zweiten Vertikalen einen positiven eingeschlossenen Winkel, der ein spitzer Winkel (a) ist, mit der X-Achse aufweist, und
die andere davon einen anderen positiven eingeschlossenen Winkel, der ein stumpfer Winkel (β) ist, mit der X-Achse aufweist, sodass die erste Vertikale und die zweite Vertikale relativ zu der Y-Achse in entgegengesetzten Richtungen geneigt sind, und
wobei die erste Drehachse zu der zweiten Drehachse parallel ist,
wobei das Gebläse **dadurch gekennzeichnet ist, dass** die erste Drehachse und die zweite Drehachse um eine Entfernung H beabstandet sind und wobei das erste Lüfterrad einen Durchmesser D1 aufweist und die Entfernung H und der Durchmesser D1 folgender Beziehung genügen: H ≤ 0,2D1.

2. Gebläse nach Anspruch 1, wobei der Durchmesser des ersten Lüfterrads von einem Durchmesser des zweiten Lüfterrads verschieden ist.

3. Gebläse nach Anspruch 2, wobei der Durchmesser des zweiten Windrads als D2 gekennzeichnet ist und D2 ≥ 0,6D1.

4. Klimaanlagen-Inneneinheit (1000), umfassend:
ein Gehäuse (200), das mit einem Lufteinlass (4) und einem Luftauslass (5) versehen ist;
einen Innen-Wärmetauscher (300), der in dem Gehäuse angeordnet ist;
ein Gebläse (100) nach einem der Ansprüche 1 bis 3, wobei das Gebläse in dem Gehäuse angeordnet ist und dazu konfiguriert ist, Luft in Richtung des Luftauslasses zuzuführen.

5. Klimaanlagen-Inneneinheit nach Anspruch 4, wobei es sich bei der Klimaanlagen-Inneneinheit um eine vertikale Klimaanlagen-Inneneinheit handelt, wobei die vertikale Klimaanlagen-Inneneinheit ferner eine Luftkanal-Anbauplatte umfasst, wobei die Luftkanal-Anbauplatte vor dem Innen-Wärmetauscher angeordnet ist und das Gebläse an der Luftkanal-Anbauplatte befestigt ist.

6. Klimaanlagen-Inneneinheit nach Anspruch 4, wobei es sich bei der Klimaanlagen-Inneinheit um eine Hängeeinheit handelt und der Luftauslass in einer Frontplatte des Gehäuses gebildet ist.

## Revendications

1. Ventilateur (100), comportant :
une première roue éolienne (1) comportant un premier moyeu (10) et une pluralité de premières pales (11) agencées sur le premier moyeu et espacées les unes des autres, et la première roue éolienne ayant un premier axe de rotation (17), dans lequel la première roue éolienne est une roue éolienne diagonale ou une roue éolienne à écoulement axial ;
une deuxième roue éolienne (2) comportant un deuxième moyeu (20) et une pluralité de deuxièmes pales (21) agencées sur le deuxième moyeu et espacées les unes des autres, la deuxième roue éolienne ayant un deuxième axe de rotation (27), et la première roue éolienne étant agencée en amont de la deuxième roue éolienne dans une direction d'écoulement d'un écoulement d'air, dans lequel la deuxième roue éolienne est une roue éolienne diagonale ou une roue éolienne à écoulement axial,
dans lequel un plan espacé du ventilateur est défini comme étant un plan de référence (3), le plan de référence est parallèle au premier axe de rotation ou au deuxième axe de rotation, une projection orthographique du premier axe de rotation ou du deuxième axe de rotation sur le plan de référence est définie comme étant l'axe Y, et une ligne droite sur le plan de référence et perpendiculaire à l'axe Y est définie comme étant l'axe X,
dans lequel, quand chaque première pale tourne jusque sur une position à une distance la plus courte du plan de référence, la projection orthographique de la première pale sur le plan de référence est une première projection (12), la première projection comprend une première courbe convexe (120) et une première courbe concave (121) raccordées bout à bout, deux premières intersections (C, D) sont définies sur le plan de référence et agencées en amont et en aval de la première projection dans la direction d'écoulement de l'écoulement d'air, respectivement, chaque première intersection est une intersection de deux premières tangentes (14), deux premières tangentes sur le même côté sont tangentielles par rapport à la première courbe convexe et la première courbe concave, respectivement, une ligne de raccordement des deux premières intersections est une première ligne de raccordement (15), et une ligne droite perpendiculaire à la première ligne de raccordement est une première ligne verticale (16),
dans lequel, quand chaque deuxième pale tourne jusque sur une position à une distance la plus courte du plan de référence, la projection orthographique de la deuxième pale sur le plan de référence est une deuxième projection, la deuxième projection comprend une deuxième courbe convexe (220) et une deuxième courbe concave (221) raccordées bout à bout, deux deuxièmes intersections (E, F) sont définies sur le plan de référence et agencées en amont et en aval de la deuxième projection dans la direction d'écoulement de l'écoulement d'air, respectivement, chaque deuxième intersection est une intersection de deux deuxièmes tangentes, deux deuxièmes tangentes sur le même côté sont tangentielles par rapport à la deuxième courbe convexe et la deuxième courbe concave, respectivement, une ligne de raccordement des deux deuxièmes intersections est une deuxième ligne de raccordement (25), une ligne droite perpendiculaire à la deuxième ligne de raccordement est une deuxième ligne verticale (26), l'une parmi la première ligne verticale et la deuxième ligne verticale a un angle inclus positive, qui est un angle aigu (α), avec l'axe X, et l'autre de celles-ci a un autre angle inclus positif, qui est un angle obtus (β), avec l'axe X de telle sorte que la première ligne verticale et la deuxième ligne verticale sont inclinées dans des directions opposées par rapport à l'axe Y, et
dans lequel le premier axe de rotation est parallèle par rapport au deuxième axe de rotation,
le ventilateur étant **caractérisé en ce que** le premier axe de rotation et le deuxième axe de rotation sont séparés d'une distance H, et dans lequel la première roue éolienne a un diamètre D1, et la distance H et le diamètre D1 satisfont à une relation : H≤0,2D1.

2. Ventilateur selon la revendication 1, dans lequel le diamètre de la première roue éolienne est différent d'un diamètre de la deuxième roue éolienne.

3. Ventilateur selon la revendication 2, dans lequel le diamètre de la deuxième roue éolienne est représenté par D2, et D2≥0,6D1.

4. Unité intérieure de climatiseur (1000), comportant :
un boîtier (200) comportant une entrée d'air (4) et une sortie d'air (5) ;
un échangeur de chaleur intérieur (300) agencé dans le boîtier ;
un ventilateur (100) selon l'une quelconque des revendications 1 à 3, le ventilateur étant agencé dans le boîtier et configuré pour fournir de l'air vers la sortie d'air.

5. Unité intérieure de climatiseur selon la revendication 4, dans laquelle l'unité intérieure de climatiseur est une unité intérieure de climatiseur verticale, l'unité intérieure de climatiseur verticale comporte par ailleurs une plaque de montage de conduite d'air, la plaque de montage de conduite d'air est agencée devant l'échangeur de chaleur intérieur, et le ventilateur est fixé sur la plaque de montage de conduite d'air.

6. Unité intérieure de climatiseur selon la revendication 4, dans laquelle l'unité intérieure de climatiseur est une unité suspendue, et la sortie d'air est formée dans un panneau avant du boîtier.
